# EUROPÄISCHE PATENTSCHRIFT

(11) **EP 2 718 207 B1**
(45) Veröffentlichungstag und Bekanntmachung des Hinweises auf die Patenterteilung: **27.03.2019**
(21) Anmeldenummer: 12748660.3
(22) Anmeldetag: 27.07.2012
(51) Int. Cl.: B65G 7/08

(54) **VORRICHTUNG UND VERFAHREN ZUM BELADEN EINER TRANSPORTEINHEIT**
DEVICE AND METHOD FOR LOADING A TRANSPORTING UNIT
DISPOSITIF ET PROCÉDÉ POUR CHARGER UNE UNITÉ DE TRANSPORT

(30) Priorität: 29.07.2011 DE 102011080096
(43) Veröffentlichungstag der Anmeldung: 16.04.2014
(73) Patentinhaber: Siemens Aktiengesellschaft, 80333 München (DE)
(72) Erfinder: ENENKEL, Peter, 78462 Konstanz (DE)
(86) Internationale Anmeldenummer: PCT/EP2012/064761
(87) Internationale Veröffentlichungsnummer: WO 2013/017538

(56) Entgegenhaltungen:
- DE-B4- 4 245 047
- US-A1- 2003 196 873

## Beschreibung

Die Erfindung geht aus von einer Vorrichtung und einem Verfahren zum Beladen einer zum Transport von Stückgütern vorgesehenen Transporteinheit gemäß Anspruch 1 und Anspruch 9.

Der Transport von Stückgütern, insbesondere von postalischen Stückgütern, basiert heute aufgrund der erforderlichen Transportfülldichte überwiegend auf lose und manuell beladenen Containern/Wechselbehältern und deren Transport auf der Straße. Während die Sortierung in den Sortierzentren heute weitgehend optimiert und sehr leistungsstark ist, stellt die manuelle Beladung der Wechselbehälter/Container an den Eingangstoren ein stetige Engstelle dar und führt dazu, dass die Logistikunternehmen bei einer erforderlichen Durchsatzsteigerung des Sortierzentrums wesentlich mehr Beladetore, Personal und den damit verbundenen Platzbedarf benötigen. Dies ist mit erheblichen baulichen Veränderungen, insbesondere mit einem Neubau verbunden.

Die manuelle Beladung extrem inhomogener postalischer Güter in den Wechselbehälter/Container erfolgt heute mit einem Durchsatz von weniger als 1000 Paketen/Stunde und ist aus ergonomischer Sicht äußerst grenzwertig.

Es gibt bisher vielfältige Vorrichtungen bekannt, wie insbesondere in der Form teleskopischer, in die Transporteinheit einfahrbarer Förderer, die die Bedienkraft bei der Beladung derselben unterstützen. Ferner werden von Teleskopherstellern Hilfeeinrichtungen zur Verfügung gestellt, die an die vorhandenen Teleskopförderern angebracht werden können. Hierzu zählen vor allem Hubplattformen. Diese Hubplattformen ermöglichen zwar eine bessere Anpassung an die Beladehöhe, entbinden aber die Bedienkraft nicht von der zu erbringenden Hebeleistung.

In der US 2003/0196873 A1 und der DE 42 45 047 B4 sind bekannte Vorrichtungen zum Beladen von Transporteinheiten beschrieben.

Die vorgenannte Schrift DE 42 45 047 B4 (Knapp AG) offenbart eine Vorrichtung zum Beladen einer zum Transport von Stückgütern vorgesehenen Transporteinheit wie ein LKW oder ein Eisenbahnwaggon. Dabei ist eine in die Transporteinheit einfahrbare Fördereinheit mit mehreren Förderbahnen vorgesehen. Die Förderbahnen dienen zum Fördern und Abladen von mehreren Stückgutströmen in die Transporteinheit. Vorgängig ist eine Sortiereinheit vorgesehen, die mit der Fördereinheiten fördertechnisch verbunden ist und den zu verladenden Stückgutstrom gemäß einem Sortierkriterium sortiert, wobei das Sortierkriterium auf zumindest eine physikalische Eigenschaft der Stückgüter bezogen ist, die das Gewicht und die Größe wie Höhe oder das Volumen ist. Die sortierten Stückgutströme werden je in einem Puffer zwischengespeichert und dann anschließend nebeneinander und/oder übereinander in Lagen sortiert in die Transporteinheit verladen.

Ausgehend von diesem Stand der Technik liegt der Erfindung die Aufgabe zugrunde, eine Vorrichtung und ein Verfahren zum Beladen von Transporteinheiten bereit zu stellen, durch welche Vorrichtung bzw. Verfahren eine in Bezug auf die Transportfülldichte der Transporteinheit bessere Beladung mit erhöhtem Beladedurchsatz und gesteigertem Arbeitskomfort erreicht werden kann.

Diese Aufgabe wird durch die in den Ansprüchen 1 und 9 angeführten Merkmale gelöst.

Die Vorrichtung weist zumindest eine zweite Fördereinheit auf, die zum Fördern und Abladen eines zweiten Stückgutstroms in der Transporteinheit vorgesehen ist, wobei die Stückgüter auf die Stückgutströme gemäß wenigstens einem Sortierkriterium verteilt sind. Hierdurch kann auf eine zumindest teilautomatisierte Weise, basierend auf dem Sortierkriterium eine optimale Ausnutzung des zur Verfügung stehenden Nutzraums der Transporteinheit erreicht werden. Durch die Verteilung der Stückgüter auf zumindest zwei Stückgutströme kann insbesondere eine optimierte räumliche Verteilung der Stückgüter im Nutzraum der Transporteinheit gemäß dem Sortierkriterium erzielt werden.

Die Erfindung eignet sich insbesondere für eine Nutzung mit einer Transporteinheit, die an ein Kraftfahrzeug anhängbar ist und insbesondere als Wechselbehälter oder Frachtcontainer ausgebildet ist. Bei einem Ladevorgang mittels der Vorrichtung ist die Transporteinheit zweckmäßigerweise an ein Gebäude angedockt, aus welchem die Fördereinheiten ausgefahren und in den Nutzraum der Transporteinheit eingefahren werden. Dieses Gebäude entspricht vorzugweise einem Sortierzentrum, in welchem die zu beladenden Stückgüter vor dem Beladevorgang sortiert werden.

Die Fördereinheiten können insbesondere jeweils als teleskopierbare Einheiten ausgebildet sein. Sie können ferner unabhängig voneinander in den Nutzraum der Transporteinheit eingefahren werden.

Es ist jedoch von Vorteil, wenn die erste Fördereinheit und die zweite Fördereinheit gemeinsam in die Transporteinheit einfahrbar sind. Die Fördereinheiten könnten hierbei separat voneinander angetrieben werden, es wird jedoch in einer vorteilhaften Ausbildung vorgeschlagen, dass die Fördereinheiten zu einem gemeinsamen Einfahren miteinander mechanisch gekoppelt sind.

Um eine besonderes schnelle und einfache Bereitstellung der zumindest zwei Stückgutströme zu erreichen wird vorgeschlagen, dass die Vorrichtung eine Sortiereinheit umfasst, die mit den Fördereinheiten fördertechnisch verbunden ist und einen Hauptstückgutstrom zur Erzeugung des ersten und des zweiten Stückgutstroms gemäß dem Sortierkriterium sortiert. Hierdurch können die Fördereinheiten weitestgehend ohne menschlichen Eingriff mit nach dem Sortierkriterium vorsortieren Stückgütern eingespeist werden. Diese Sortiereinheit ist vorzugsweise im Bereich einer Abgabestelle eines Sortierzentrums angeordnet, die einem Tor des Sortierzentrums zugeordnet ist, an welchem die zu beladende Transporteinheit angedockt ist.

Erfindungsgemäß ist das Sortierkriterium auf zumindest eine physikalische Eigenschaft der Stückgüter bezogen, die eine Erstreckung, das Gewicht, das Volumen, eine Oberfläche, die Gestalt und/oder eine Kombination mehrerer dieser Merkmale ist. Durch die Berücksichtigung eines dieser Merkmale oder einer Kombination mehrerer dieser Merkmale kann eine Sortierung der Stückgüter erreicht werden, die auf einen optimalen Füllgrad des Nutzraums der Transporteinheit gerichtet ist.

Zweckmäßigerweise steht die Sortiereinheit in Wirkverbindung mit einer Erfassungseinheit, die zur Erfassung der physikalischen Eigenschaft vorgesehen ist. Diese kann z.B. als Lese- und/oder Wiegevorrichtung ausgebildet sein. Der Erfassungseinheit ist vorzugsweise eine Trennvorrichtung nachgeschaltet, die abhängig von der erfassten bzw. ermittelten physikalischen Eigenschaft die Stückgüter gemäß dem Sortierkriterium voneinander trennt.

Insbesondere dient das Sortierkriterium dazu, anhand der physikalischen Eigenschaft zwischen "schüttbaren" und "unschüttbaren" - im Folgenden "nicht schüttbar" genannt - Stückgütern zu unterscheiden. Stückgüter, die als schüttbar betrachtet werden können, werden herkömmlicherweise von einer Bedienkraft anders gehandhabt als die weiteren Stückgüter, welche per se größer und/oder schwerer sind. Durch eine Sortierung gemäß diesem Kriterium kann eine Verteilung auf die Fördereinheiten erfolgen, wobei die Fördereinheiten jeweils an die Besonderheiten der verschiedenen, schüttbaren oder nicht schüttbaren Stückgüter angepasst sind. Somit kann für die Fördereinheiten jeweils eine unterschiedliche Behandlungstechnik, insbesondere Abladetechnik eingesetzt werden, mittels welcher der für den jeweiligen Typ von Stückgütern möglichst optimale Behandlungsdurchsatz erreicht werden kann. Zur Prüfung, ob ein Stückgut das Sortierkriterium "schüttbar" erfüllt, kann als physikalische Eigenschaft insbesondere eine Kantenlänge, eine Gewichtskenngröße und/oder eine auf diesen Merkmalen basierende Größe berücksichtigt werden. Die physikalische Eigenschaft wird zweckmäßigerweise mit einem voreingestellten Schwellwert verglichen, wobei ein Unter- oder Überschreiten dieses Schwellwerts eine Zuordnung in die entsprechende Sortierkategorie bewirkt. Beispielsweise kann als Schwellwert für eine maximale Kantenlänge ein Wert zwischen 300 mm und 400 mm gesetzt werden.

Die erfindungsgemäße Ausnutzung des Nutzraums der Transporteinheit und ein hoher Arbeitskomfort der Bedienkraft bei einer Beladung im obersten Bereich des Nutzraums werden außerdem dadurch erreicht, dass mittels der Fördereinheiten die Förderung der Stückgutströme auf zumindest zwei Förderbahnen unterschiedlicher Höhe erfolgt. Eine Höhe ist hierbei vorzugsweise relativ zum Boden der Transporteinheit definiert.

In diesem Zusammenhang wird vorgeschlagen, dass die oberste Förderbahn zur Förderung schüttbarer Stückgüter vorgesehen ist. Somit kann besonders vorteilhaft ein Schütten dieser Stückgüter über einen Stapel weiterer, größerer und schwererer Stückgüter erfolgen, die mittels einer unteren Förderbahn im Nutzraum abgeladen wurden. Hierdurch kann das Abladen der schüttbaren Stückgüter mittels der obersten Förderbahn ungeordnet und mit hohem Durchsatz erfolgen und es kann eine Hebeleistung der Bedienkraft eingespart werden.

In einer vorteilhaften Weiterbildung der Erfindung wird vorgeschlagen, dass die Vorrichtung eine Rutsche aufweist, die am Abladeende der untersten Förderbahn angeordnet ist. Somit kann eine schnelle und für die Bedienkraft komfortable Abladung erreicht werden, die überwiegend durch eine Verschiebbewegung der Stückgüter erfolgt. Ist die unterste Förderbahn zur Förderung von Stückgütern vorgesehen, die gemäß dem Sortierkriterium als "nicht schüttbar" gelten, kann eine Platzierung an eine durch die Bedienkraft zur Bildung eines Stapels bestimmte Stelle einfach erfolgen. Um die Erreichbarkeit dezentraler Randbereiche des Nutzraums der Transporteinheit zu erhöhen kann die Rutsche als schwenkbare Einheit ausgebildet sein.

Der Arbeitskomfort für die Bedienkraft kann dadurch weiter erhöht werden, dass die Vorrichtung eine Hubvorrichtung aufweist, die zur Höhenverstellung zumindest der untersten Förderbahn vorgesehen ist. Diese ermöglicht vorzugsweise eine Anpassung zumindest des Abladeendes der untersten Förderbahn an die wachsende Höhe einer Ansammlung, insbesondere eines Stapels von Stückgütern. Durch die Hubvorrichtung kann das Abladeende in einer Höhe positioniert werden, die in Bezug auf die Ansammlungshöhe für die Bedienkraft ergonomisch ist. Es kann besonders vorteilhaft unabhängig von dieser Ansammlungshöhe ein Abladen der Stückgüter ohne Hebeleistung der Bedienkraft erreicht werden.

In diesem Zusammenhang wird vorgeschlagen, dass die Vorrichtung eine für die Bedienkraft vorgesehene Arbeitsplattform aufweist, die in der Höhe verstellbar ist. Hierdurch kann der manuelle Greifraum der sich auf der Arbeitsplattform befindenden Bedienkraft deutlich erweitert werden. Insbesondere kann der heute "über Kopf" liegende Laderaum in der Transporteinheit genutzt werden. Die Arbeitsplattform ist vorzugsweise am Abladeende der untersten Fördereinheit gekoppelt. Zum Heben der Arbeitsplattform kann die Hubvorrichtung zur Höhenverstellung der untersten Förderbahn oder eine davon unabhängige Hebeeinheit eingesetzt werden.

Des Weiteren wird vorgeschlagen, dass die Vorrichtung ein Förderband umfasst, das am Abladeende der obersten Förderbahn angeordnet ist und eine einstellbare Förderrichtung aufweist. Es kann eine hohe Beweglichkeit der obersten Förderbahn erzielt werden, durch welche ein großer Abladeraum und damit ein hoher Füllgrad des Nutzraums der Transporteinheit erreicht werden können. Die Förderrichtung kann bei Bedarf durch die Bedienkraft manuell eingestellt werden. Insbesondere kann das Förderband als teleskopierbares und/oder schwenkbares Förderband ausgebildet sein.

Ist die oberste Förderbahn zur Förderung von Stückgütern vorgesehen, die als schüttbar betrachtet werden, können die Stückgüter mit hohem Durchsatz über einen mit den nicht schüttbaren Stückgütern gebildeten Stapel abgelegt werden.

Es kann ferner eine weitere Optimierung des Füllgrads der Transporteinheit erreicht werden, wenn, bezogen auf die Nutzhöhe der Transporteinheit, die oberste Förderbahn zum Ablegen von Stückgütern im obersten Drittel der Nutzhöhe dient. Unter der "Nutzhöhe" soll insbesondere die vertikale Erstreckung des Nutzraums der Transporteinheit verstanden werden.

Ferner wird ein Verfahren zum Beladen einer zum Transport von Stückgütern, insbesondere von postalischen Sendungen, vorgesehenen Transporteinheit, vorgeschlagen, bei welchem tückgüter auf zumindest eine erste und eine zweite Fördereinheit gemäß einem Sortierkriterium verteilt werden, die Fördereinheiten in die Transporteinheit eingefahren werden, Stückgüter mittels der ersten Fördereinheit in der Transporteinheit abgeladen werden und Stückgüter mittels der zweiten Fördereinheit in der Transporteinheit abgeladen werden. Hierdurch kann auf eine zumindest teilautomatisierte Weise, basierend auf dem Sortierkriterium eine optimale Ausnutzung des zur Verfügung stehenden Nutzraums der Transporteinheit erreicht werden. Durch die Verteilung der Stückgüter auf zumindest zwei Stückgutströme kann insbesondere eine optimierte räumliche Verteilung der Stückgüter im Nutzraum gemäß dem Sortierkriterium erzielt werden.

Die Fördereinheiten bilden hierbei vorzugsweise zumindest zwei Förderbahnen, die eine unterschiedliche Höhe aufweisen, wodurch eine besonders vorteilhafte Ausnutzung des Nutzraums der Transporteinheit und ein hoher Arbeitskomfort der Bedienkraft bei einer Beladung im obersten Bereich des Nutzraums erreicht werden können.

Ferner wird vorgeschlagen, dass das Sortierkriterium dazu dient, anhand einer physikalischen Eigenschaft der Stückgüter zwischen "schüttbaren" und "unschüttbaren" Stückgütern zu unterscheiden, wobei Stückgüter, die als nicht schüttbar betrachtet werden, mittels der untersten Förderbahn in der Transporteinheit gestapelt werden und Stückgüter, die als schüttbar betrachtet werden, mittels der obersten Förderbahn auf den gebildeten Stapel nicht schüttbarer Stückgüter abgeladen werden. Hierdurch kann ein an die Eigenschaften der Stückgüter angepasster Beladevorgang mit einem hohen Durchsatz erreicht werden.

Es wird ein Ausführungsbeispiel anhand der Zeichnungen erläutert. Es zeigen:
- Figur 1:: eine schematische Darstellung einer an einem Sortierzentrum angedockten Transporteinheit, in welcher eine Ladevorrichtung eingefahren ist und
- Figur 2:: eine schematische Darstellung einer Sortiereinheit von oben, die der Ladevorrichtung vorgeschaltet und mit dieser fördertechnisch verbunden ist.

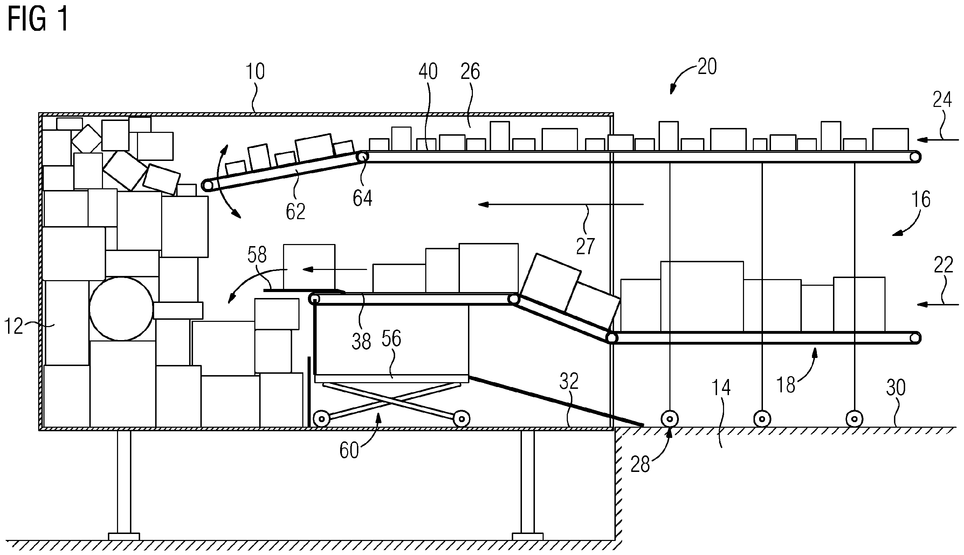

Figur 1 zeigt in einer schematischen Schnittansicht die Anordnung einer als LKW-Anhänger oder Wechselbehälter ausgebildeten Transporteinheit 10 zum Transport von als postalischen Sendungen, insbesondere Postpaketen, ausgebildeten Stückgütern 12 in einer an einem Sortierzentrum 14 angedockten Position. Zur Beladung der Transporteinheit 10 mit Stückgütern 12 ist eine Vorrichtung 16 vorgesehen, welche zwei unterschiedliche Fördereinheiten 18, 20 aufweist, die jeweils zum Fördern und Abladen eines Stückgutstroms 22 bzw. 24 in der Transporteinheit 10 dienen.

Die Fördereinheiten 18, 20 können zusammen in den Nutzraum 26 der Transporteinheit 10 in einer Einfahrrichtung 27 eingefahren werden, die insbesondere der Längsrichtung der Transporteinheit 10 entspricht. Sie sind im betrachteten Ausführungsbeispiel mechanisch als zusammenhängende Einheit miteinander gekoppelt, die ein Fahrwerk 28 aufweist, welches auf dem Boden 30 des Sortier- und Verteilzentrums 14 bzw. auf dem Boden 32 der Transporteinheit 10 rollen kann.

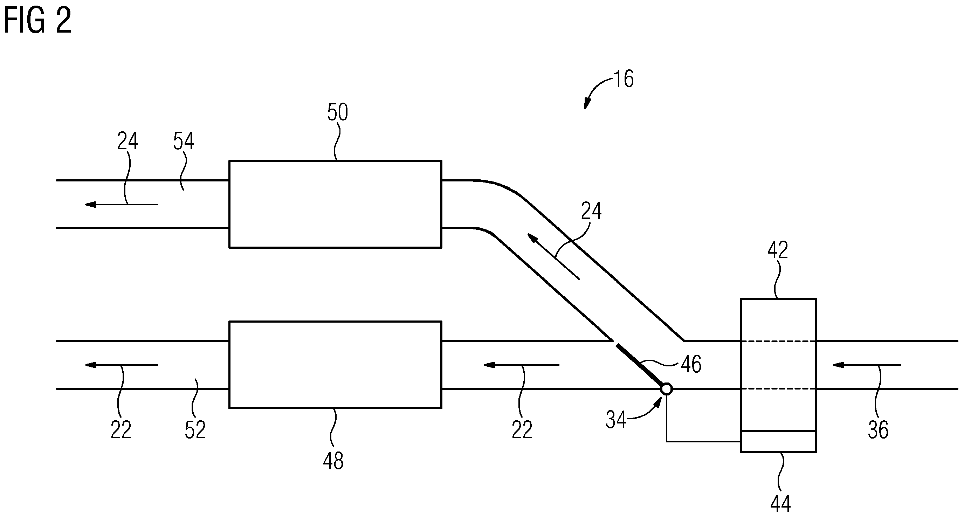

Mit den Fördereinheiten 18, 20 ist eine in Figur 2 gezeigte Sortiereinheit 34 fördertechnisch verbunden, die dazu dient, einen Hauptstückgutstrom 36 zur Erzeugung des ersten und des zweiten Stückgutstroms 22, 24 gemäß einem Sortierkriterium zu sortieren, wie weiter unten näher erläutert. Die Sortiereinheit 34 ist im Bereich der Abgabestelle des Sortierzentrums 14 angeordnet, die dem Gebäudetor zugeordnet ist, an welchem die Transporteinheit 10 angedockt ist. Der Hauptstückgutstrom 36 wird beispielweise mittels einer nicht näher dargestellten Sortieranlage des Sortierzentrums 14 erzeugt, die die Stückgüter 12 z.B. gemäß deren Adressaten sortiert.

Die Fördereinheiten 18, 20 weisen jeweils eine Förderbahn 38, 40 auf, die unterschiedliche Höhen relativ zum Boden 30 bzw. 32 aufweisen. Im betrachteten Ausführungsbeispiel sind die Förderbahnen 38, 40 jeweils von einem Satz von Förderbändern gebildet, die aneinander angrenzen. Die Förderbahn 38 entspricht in der gezeigten Ausführung der untersten Förderbahn, während die Förderbahn 40 der obersten Förderbahn entspricht. Die Förderbahnen 38, 40 können in deren Verlauf entlang der Stückgutströme 22, 24 eine variable Höhe haben, indem sie - wie dargestellt - Steigungen und Gefälle aufweisen.

Der Beladevorgang der Transporteinheit 10 erfolgt wie im Folgenden beschrieben.

Es erfolgt zunächst eine automatische Erkennung der Stückgüter 12 des Hauptstückgutstroms 36. Hierbei wird erkannt, ob ein zu sortierendes Stückgut 12 ein bestimmtes Sortierkriterium erfüllt. Insbesondere können Merkmale der Stückgüter 12 wie eine Form, eine Erstreckung, eine Oberfläche, das Volumen und/oder das Gewicht erfasst werden und einer Sortierung gemäß dem Sortierkriterium zugrunde gelegt werden. Im betrachteten Ausführungsbeispiel bezieht sich das Sortierkriterium auf eine Erstreckung, die insbesondere eine Kantenlänge ist, und alternativ oder zusätzlich auf das Gewicht der Stückgüter 12. Dies erfolgt mittels einer Erfassungsvorrichtung 42, die zur Erfassung des bzw. der entsprechenden Merkmale der Stückgüter 12 vorgesehen ist. Die Erfassungsvorrichtung 42 ist insbesondere als Lese- und/oder Wiegevorrichtung ausgebildet. Auf der Grundlage von einer oder mehreren durch die Erfassungsvorrichtung 42 erfassten Kenngrößen erfolgt eine Auswertung durch eine Auswerteeinheit 44 der Sortiereinheit 34, in welcher ermittelt wird, ob das Stückgut 12 ein vorbestimmtes Sortierkriterium erfüllt oder nicht. Anhand der erfassten Kenngrößen kann durch die Auswerteeinheit 44 ermittelt werden, ob das untersuchte Stückgut 12 die Eigenschaft "schüttbar" oder "nicht schüttbar" aufweist.

Abhängig von dieser Ermittlung durch die Auswerteeinheit 44 wird das Stückgut 12 mittels einer Trennvorrichtung 46, die im betrachteten Beispiel als Weiche ausgebildet ist, entweder in den Stückgutstrom 22, falls das Stückgut 12 als "nicht schüttbar" betrachtet werden kann, oder in den Stückgutstrom 24, falls das Stückgut 12 als "schüttbar" betrachtet werden kann, weitergeführt. Die Trennvorrichtung 46 im Zusammenwirken mit der Erfassungsvorrichtung 42 und der Auswerteeinheit 44 führt - gemäß dem Sortierkriterium - die Stückgüter 12 in den ersten oder in den zweiten Stückgutstrom 22 bzw. 24, wobei die Stückgutströme 22, 24 jeweils einer unterschiedlichen Förderbahn 38 bzw. 40 der Fördereinheiten 18, 20 zugeordnet sind.

Nach Trennung des Hauptstückgutstroms 36 mittels der Sortiereinheit 34 erfolgt eine Speicherung der Stückgüter 12 in Speichereinheiten 48, 50, die jeweils in einem der Stückgutströme 22, 24 angeordnet sind. Die Speichereinheiten 48, 50 sind schematisch dargestellt und können beispielsweise als Wendelrutsche oder Spiralförderer ausgebildet sein.

Nach der Speicherung werden die Stückgüter 12 der jeweiligen Stückgutströme 22, 24 automatisch auf zwei getrennte Förderabschnitte 52, 54 zur jeweiligen Fördereinheit 18, 20 gefördert. Hierbei werden die Förderbahnen 38, 40 mit Stückgütern 12 befüllt.

Anschließend werden die Fördereinheiten 18, 20 zusammen in den Nutzraum 26 der angedockten Transporteinheit 10 eingefahren. Die Vorrichtung 16 weist außerdem eine Arbeitsplattform 56 auf, auf welcher sich eine Bedienkraft aufhalten kann und die zusammen mit den Fördereinheiten 18, 20 in den Nutzraum 26 eingefahren wird. Das Einfahren wird mittels der Bedienkraft gesteuert und ist motorgestützt.

Es werden zunächst die Stückgüter 12 des ersten Stückgutstroms 22 behandelt, die als "nicht schüttbar" betrachtet werden und auf der untersten Förderbahn 38 angeordnet sind. Diese Stückgüter 12 werden auf den Boden 32 der Transporteinheit 10 abgeladen und aufeinander gestapelt. Hierbei werden die Stückgüter 12 einfach von der Bedienkraft von deren Position am Ende der untersten Förderbahn 38 auf den Boden 32 bzw. in eine Stapelposition verschoben. Hierdurch kann ein mühsames Heben der Stückgüter 12 vermieden werden. Die unterste Fördereinheit 18 weist außerdem eine teleskopierbare Rutsche 58 auf, die das Verschieben der Stückgüter 12 in die Stapelposition durch die Bedienkraft unterstützt.

Die Vorrichtung 16 weist ferner eine vorzugweise motorgestützte Hubvorrichtung 60 auf, die zur Höhenverstellung der untersten Förderbahn 38 vorgesehen ist, sodass die Arbeitshöhe an die wachsende Höhe des Stapels kontinuierlich angepasst werden kann. Mittels der Hubvorrichtung 60 oder einer unabhängig von dieser antreibbaren Hubvorrichtung kann die Arbeitsplattform für die Bedienkraft in der Höhe verstellt werden.

Das hier oben beschriebene Stapeln der Stückgüter 12, die in den Nutzraum 26 im Stückgutstrom 22 mittels der untersten Förderbahn 38 gefördert und als "nicht schüttbar" betrachtet werden, erfolgt bis eine Höhe relativ zum Boden 32, die ca. zwei Dritteln der Höhe, d.h. der vertikalen Erstreckung, des Nutzraums 26 entspricht.

Die restliche Ladehöhe, d.h. insbesondere das oberste Drittel der Höhe des Nutzraums 26, wird durch einen ungeordneten Ladevorgang der im Stückgutstrom 24 mittels der obersten Förderbahn 40 in den Nutzraum 26 geförderten Stückgüter 12 aufgefüllt. Diese Stückgüter 12, die als "schüttbare" Güter gelten, werden hierbei auf den Stapeln aufgeschüttet, bis ein gewünschter Füllgrad erreicht ist. Um eine hohe Bewegungsfreiheit zu erreichen ist die oberste Förderbahn 40 an deren Abladeende von einem Förderband 62 gebildet, das teleskopierbar und um eine horizontale Achse 64 schwenkbar ist.

Die Fördereinheiten 18, 20 werden anschließend entgegen der Richtung 27 zurückgezogen, um eine ergonomische Reichweite der Bedienkraft erneut bereitzustellen und den oben beschriebenen schichtweise Aufbau des Stapels durchzuführen.

## Patentansprüche

1. Vorrichtung zum Beladen einer zum Transport von Stückgütern (12), insbesondere von postalischen Sendungen, vorgesehenen Transporteinheit (10), mit:
- einer ersten, in die Transporteinheit (10) einfahrbare Fördereinheit (18), die zum Fördern und Abladen eines ersten Stückgutstroms (22) in der Transporteinheit (10) vorgesehen ist, wobei die erste Fördereinheit (18) eine erste Förderbahn (38) bildet;
- zumindest einer zweiten in die Transporteinheit (10) einfahrbare Fördereinheit (20), die zum Fördern und Abladen eines zweiten Stückgutstroms (24) in der Transporteinheit (10) vorgesehen ist, wobei die zweite Fördereinheit (20) eine zweite Förderbahn (40) bildet;
- einer Sortiereinheit (34), die mit den Fördereinheiten (18, 20) fördertechnisch verbunden ist und einen Hauptstückgutstrom (36) zur Erzeugung des ersten (22) und des zweiten Stückgutstroms (24) gemäß einem Sortierkriterium sortiert, wobei das Sortierkriterium auf zumindest eine physikalische Eigenschaft der Stückgüter (12) bezogen ist, die eine Erstreckung, das Gewicht, das Volumen, eine Oberfläche, die Gestalt und/oder eine Kombination mehrerer dieser Eigenschaften ist, und
wobei die zwei Förderbahnen (38, 40) eine unterschiedliche Höhe aufweisen, so dass die Stückgüter (12) von den Fördereinheiten (18, 20) in unterschiedlichen Höhen in der Transporteinheit (10) abgeladen werden können.

2. Vorrichtung nach Anspruch 1,
**dadurch gekennzeichnet, dass**
die erste Fördereinheit (18) und die zweite Fördereinheit (20) gemeinsam in die Transporteinheit (10) einfahrbar sind.

3. Vorrichtung nach Anspruch 1 oder 2,
**dadurch gekennzeichnet, dass**
das Sortierkriterium dazu dient, anhand einer physikalischen Eigenschaft der Stückgüter zwischen schüttbaren und nicht schüttbaren Stückgütern (12) zu unterscheiden.

4. Vorrichtung nach Anspruch 3,
**dadurch gekennzeichnet, dass**
die oberste Förderbahn (40) zur Förderung schüttbarer Stückgüter (12) vorgesehen ist.

5. Vorrichtung nach einem der Ansprüche 1 bis 4,
**gekennzeichnet durch**
eine Rutsche (58), die am Abladeende der untersten Förderbahn (38) angeordnet ist.

6. Vorrichtung nach einem der Ansprüche 1 bis 5,
**gekennzeichnet durch**
eine Hubvorrichtung (60), die zur Höhenverstellung zumindest der untersten Förderbahn (38) vorgesehen ist.

7. Vorrichtung nach Anspruch 6,
**gekennzeichnet durch**
eine für die Bedienkraft vorgesehene Arbeitsplattform (56), die in der Höhe verstellbar ist.

8. Vorrichtung nach einem der Ansprüche 4 bis 7,
**gekennzeichnet durch**
ein Förderband (62), das am Abladende der obersten Förderbahn (40) angeordnet ist und eine einstellbare Förderrichtung aufweist.

9. Verfahren zum Beladen einer zum Transport von Stückgütern (12), insbesondere von postalischen Sendungen, vorgesehenen Transporteinheit (10) mit einer Vorrichtung nach einem der Ansprüche 1 bis 8, bei welchem
- Stückgüter (12) auf zumindest die erste und die zweite Fördereinheit (18, 20) gemäß dem Sortierkriterium verteilt werden;
- die Fördereinheiten (18, 20) in die Transporteinheit (10) eingefahren werden;
- Stückgüter (12) mittels der ersten Fördereinheit (18) in der Transporteinheit (10) abgeladen werden;
- Stückgüter (12) mittels der zweiten Fördereinheit (20) in der Transporteinheit (10) abgeladen werden;
die Stückgüter (12) von den Fördereinheiten (18, 20) in unterschiedlichen Höhen in der Transporteinheit (10) abgeladen werden.

10. Verfahren nach Anspruch 9,
**dadurch gekennzeichnet, dass**
das Sortierkriterium dazu dient, anhand einer physikalischen Eigenschaft der Stückgüter (12) zwischen schüttbaren und nicht schüttbaren Stückgütern (12) zu unterscheiden, wobei
- Stückgüter (12), die als nicht schüttbar betrachtet werden, mittels der untersten Förderbahn (38) in der Transporteinheit (10) gestapelt werden und
- Stückgüter (12), die als schüttbar betrachtet werden, mittels der obersten Förderbahn (40) auf den gebildeten Stapel nicht schüttbarer Stückgüter (12) abgeladen werden.

## Claims

1. Device for loading a transporting unit (10) intended for transporting piece goods (12), in particular mail deliveries, having:
- a first conveying unit (18) which can be moved into the transporting unit (10) and is intended for conveying and unloading a first stream of piece goods (22) in the transporting unit (10), wherein the first conveying unit (18) forms a first conveyor track (38);
- at least one second conveying unit (20) which can be moved into the transporting unit (10) and is intended for conveying and unloading a second stream of piece goods (24) in the transporting unit (10), wherein the second conveying unit (20) forms a second conveyor track (40);
- a sorting unit (34) which is connected to the conveying units (18, 20) using conveyor technology and sorts a primary stream of piece goods (36) in order to generate the first (22) and the second stream of piece goods (24) according to a sorting criterion, wherein the sorting criterion is related to at least one physical attribute of the piece goods (12) which is an extent, the weight, the volume, a surface, the shape and/or a combination of a plurality of said features, and
wherein the two conveyor tracks (38, 40) have a different height, such that the piece goods (12) can be unloaded from the conveying units (18, 20) at different heights in the transporting unit (10).

2. Device according to claim 1,
**characterised in that**
the first conveying unit (18) and the second conveying unit (20) can be moved jointly into the transporting unit (10).

3. Device according to claim 1 or 2,
**characterised in that**
the sorting criterion is used in order to differentiate between conveyor-dischargeable and conveyor-non-dischargeable piece goods (12) on the basis of a physical attribute of the piece goods.

4. Device according to claim 3,
**characterised in that**
the uppermost conveyor track (40) is intended for conveying conveyor-dischargeable piece goods (12).

5. Device according to one of claims 1 to 4,
**characterised by**
a chute (58) which is arranged at the unloading end of the lowermost conveyor track (38).

6. Device according to one of claims 1 to 5,
**characterised by**
a lifting device (60) which is intended for adjusting the height at least of the lowermost conveyor track (38).

7. Device according to claim 6,
**characterised by**
a working platform (56) intended for the operator which is adjustable in height.

8. Device according to one of claims 4 to 7,
**characterised by**
a conveyor belt (62) which is arranged at the unloading end of the uppermost conveyor track (40) and has a selectable conveying direction.

9. Method for loading a transporting unit (10) intended for transporting piece goods (12), in particular mail deliveries, having a device according to one of claims 1 to 8, wherein
- piece goods (12) are distributed onto at least the first and the second conveying unit (18, 20) according to the sorting criterion;
- the conveying units (18, 20) are moved into the transporting unit (10);
- piece goods (12) are unloaded in the transporting unit (10) by means of the first conveying unit (18);
- piece goods (12) are unloaded in the transporting unit (10) by means of the second conveying unit (20);
- the piece goods (12) are unloaded from the conveying units (18, 20) at different heights in the transporting unit (10) .

10. Method according to claim 9,
**characterised in that**
the sorting criterion is used in order to differentiate between conveyor-dischargeable and conveyor-non-dischargeable piece goods (12) on the basis of a physical attribute of the piece goods (12), wherein
- piece goods (12) which are regarded as conveyor-non-dischargeable are stacked by means of the lowermost conveyor track (38) in the transporting unit (10) and
- piece goods (12) which are regarded as conveyor-dischargeable are unloaded by means of the uppermost conveyor track (40) onto the formed stack of conveyor-non-dischargeable piece goods (12).

## Revendications

1. Dispositif de chargement d'une unité de transport (10) prévue pour le transport de colis (12), en particulier d'envois postaux, avec:
- une première unité de convoyage (18), pouvant entrer dans l'unité de transport (10), laquelle première unité de convoyage (18) étant prévue pour le convoyage et le déchargement d'un premier flux de colis (22) dans l'unité de transport (10), cette première unité de convoyage (18) constituant un premier chemin de convoyage (38);
- au moins une deuxième unité de convoyage (20), pouvant entrer dans l'unité de transport (10), laquelle deuxième unité de convoyage (20) étant prévue pour le convoyage et le déchargement d'un deuxième flux de colis (24) dans l'unité de transport (10), cette deuxième unité de convoyage (20) constituant un deuxième chemin de convoyage (40);
- une unité de tri (34) raccordée aux unités de convoyage (18, 20) par des moyens techniques relevant du convoyage, et un flux principal de colis (36) pour produire le premier (22) et le deuxième flux de colis (24) en fonction d'un critère de tri, ce critère de tri se rapportant à au moins une propriété physique des colis (12), laquelle est une dimension, le poids, le volume, une surface, la forme et/ou une combinaison de plusieurs de ces propriétés, et
les deux chemins de convoyage (38, 40) présentant une hauteur différente de sorte que les colis (12) peuvent être déchargés des unités de convoyage (18, 20) à des hauteurs différentes dans l'unité de transport (10).

2. Dispositif selon la revendication 1,
**caractérisé en ce que**
la première unité de convoyage (18) et la deuxième unité de convoyage (20) peuvent entrer ensemble dans l'unité de transport (10).

3. Dispositif selon la revendication 1 ou 2,
**caractérisé en ce que**
le critère de tri sert à distinguer, à l'aide d'une propriété physique des colis, entre des colis qu'on peut déverser et ceux à ne pas déverser (12).

4. Dispositif selon la revendication 3,
**caractérisé en ce que**
le chemin de convoyage (40) le plus haut est prévu pour convoyer des colis (12) qu'on peut déverser.

5. Dispositif selon l'une des revendications 1 à 4, **caractérisé par** une glissoire (58) disposée à l'extrémité de déchargement du chemin de convoyage (38) le plus bas.

6. Dispositif selon l'une des revendications 1 à 5, **caractérisé par**
un dispositif de levage (60) prévu pour régler en hauteur au moins le chemin de convoyage (38) le plus bas.

7. Dispositif selon la revendication 6,
**caractérisé par**
une plate-forme de travail (56) prévue pour l'opérateur, laquelle est réglable en hauteur.

8. Dispositif selon l'une des revendications 4 à 7,
**caractérisé par**
une bande transporteuse (62) disposée à l'extrémité de déchargement du chemin de convoyage (40) le plus haut et qui présente un dispositif de convoyage réglable.

9. Procédé de chargement d'une unité de transport prévue pour le transport de colis (12), en particulier d'envois postaux, avec un dispositif selon l'une des revendications 1 à 8, dans lequel
- les colis (12) sont répartis sur au moins la première et la deuxième unité de convoyage (18, 20) selon le critère de tri;
- les unités de convoyage (18, 20) entrent dans l'unité de transport (10);
- les colis (12) sont déchargés dans l'unité de transport (10) au moyen de la première unité de convoyage (18);
- les colis (12) sont déchargés dans l'unité de transport (10) au moyen de la deuxième unité de convoyage (20);
- les colis (12) sont déchargés des unités de convoyage (18, 20) à des hauteurs différentes dans l'unité de transport (10) .

10. Procédé selon la revendication 9,
**caractérisé en ce que**
le critère de tri sert à distinguer, à l'aide d'une propriété physique des colis, entre des colis qu'on peut déverser et ceux à ne pas déverser (12),
- les colis (12) considérés comme à ne pas déverser sont empilés au moyen du chemin de convoyage (38) le plus bas dans l'unité de transport (10), et
- les colis (12) considérés comme pouvant être déversés, sont déchargés au moyen du chemin de convoyage (40) le plus haut sur l'empilement formé des colis (12) à ne pas déverser.
